(19) Europäisches Patentamt
European Patent Office
Office européen des brevets

(11) **EP 1 928 687 B1**

(12) **EUROPÄISCHE PATENTSCHRIFT**

(45) Veröffentlichungstag und Bekanntmachung des Hinweises auf die Patenterteilung:
**08.04.2009 Patentblatt 2009/15**

(21) Anmeldenummer: 06792782.2

(22) Anmeldetag: **11.08.2006**

(51) Int Cl.:
*B60K 31/00* (2006.01)    *G05D 1/02* (2006.01)
*G06T 7/00* (2006.01)

(86) Internationale Anmeldenummer:
**PCT/EP2006/065245**

(87) Internationale Veröffentlichungsnummer:
**WO 2007/033870 (29.03.2007 Gazette 2007/13)**

(54) **VERFAHREN UND FAHRERASSISTENZSYSTEM ZUR SENSORBASIERTEN ANFAHRTSTEUERUNG EINES KRAFTFAHRZEUGS**

METHOD AND DRIVER ASSISTANCE SYSTEM FOR SENSOR-BASED DRIVING OFF CONTROL OF A MOTOR VEHICLE

PROCEDE ET SYSTEME D'AIDE A LA CONDUITE POUR LA COMMANDE DE DEMARRAGE D'UN VEHICULE AUTOMOBILE BASEE SUR UN CAPTEUR

(84) Benannte Vertragsstaaten:
**DE FR GB IT SE**

(30) Priorität: **21.09.2005 DE 102005045017**

(43) Veröffentlichungstag der Anmeldung:
**11.06.2008 Patentblatt 2008/24**

(73) Patentinhaber: **ROBERT BOSCH GMBH**
**70442 Stuttgart (DE)**

(72) Erfinder:
• **NIEHSEN, Wolfgang**
**31162 Bad Salzdetfurth (DE)**
• **VOELZ, Henning**
**70176 Stuttgart (DE)**
• **NIEM, Wolfgang**
**31141 Hildesheim (DE)**
• **GORE, Avinash**
**31141 Hildesheim (DE)**
• **SIMON, Stephan**
**31079 Sibbesse (DE)**

(56) Entgegenhaltungen:
EP-A- 1 035 455    WO-A-20/04111943
WO-A-20/05013236    WO-A2-20/04021546
DE-A1- 4 308 776    DE-A1- 4 434 698
DE-A1- 10 017 279    DE-A1- 19 751 306
US-A- 4 257 703

• **GRAEFE V: "ECHTZEIT-BILDVERARBEITUNG FUR EIN FAHRER-UNTERSTUTZUNGSSYSTEM ZUM ENSATZ AUF AUTOBAHNEN" IT + TI INFORMATIONSTECHNIK UND TECHNISCHE INFORMATIK, OLDENBOURG VERLAG. MUNCHEN, DE, Bd. 36, Nr. 1, 1. Februar 1994 (1994-02-01), Seiten 16-24, XP000435494 ISSN: 0944-2774**

## Beschreibung

Stand der Technik

Die Erfindung betrifft ein Verfahren zur Anfahrtsteuerung eines Kraftfahrzeugs, bei dem das Vorfeld des Fahrzeugs mit Hilfe einer Sensoreinrichtung erfaßt wird, die einen Radarsensor sowie eine Videokamera einschließt, und nach einem Halt des Fahrzeugs automatisch ein Anfahrfreigabesignal ausgegeben wird, wenn die Verkehrssituation es erlaubt, wobei aus den Daten der Videokamera Merkmale der Fahrbahn im Vorfeld des Fahrzeugs extrahiert werden, auf das Videobild eine Objekterkennungsprozedur angewandt wird, um Objekte im Videobild anhand vordefinierter Merkmale zu erkennen, und mindestens ein Kriterium überprüft wird, das anzeigt, daß die Fahrbahn frei ist.

Ein solches Verfahren ist aus DE 100 17 279 A bekannt.

Ein Beispiel eines Fahrerassistenzsystems, in dem ein solches Verfahren Anwendung findet, ist ein sogenanntes ACC-System (Adaptive Cruise Control), das nicht nur eine automatische Geschwindigkeitsregelung auf eine vom Fahrer gewählte Wunschgeschwindigkeit erlaubt, sondern auch eine automatische Abstandsregelung, wenn von der Sensoreinrichtung ein vorausfahrendes Fahrzeug geortet wird. Die Sensoreinrichtung wird typischerweise durch einen Radarsensor gebildet. Es sind jedoch auch Systeme bekannt, bei denen anstelle des Radarsensors oder ergänzend dazu ein monokulares oder binokulares Videosystem vorgesehen ist. Die Sensordaten werden elektronisch ausgewertet und bilden die Grundlage für die Regelung mit Hilfe eines elektronischen Reglers, der in das Antriebssystem und das Bremssystem des Fahrzeugs eingreift.

Fortgeschrittene Systeme dieser Art sollen auch in Stop & Go Situationen, beispielsweise bei einem Stau auf einer Autobahn, einen erhöhten Komfort bieten und weisen deshalb eine Stop & Go Funktion auf, die es erlaubt, das eigene Fahrzeug automatisch in den Stand zu bremsen, wenn das Vorderfahrzeug anhält, und automatisch einen Anfahrvorgang einzuleiten, wenn das Vorderfahrzeug sich wieder in Bewegung setzt. Die automatische Einleitung des Anfahrvorgangs ist jedoch unter Sicherheitsaspekten kritisch, denn es muß sichergestellt sein, daß sich unmittelbar vor dem Fahrzeug keine Fußgänger oder sonstige Hindernisse auf der Fahrbahn befinden.

Bei bekannten ACC-Systemen erfolgt die Hinderniserkennung mit Hilfe von Algorithmen, die in den Sensordaten nach Merkmalen suchen, die für bestimmte Klassen von Hindernissen charakteristisch sind. Aus der negativen Feststellung, daß keine Hindernisse geortet wurden, wird dann der Schluß gezogen, daß die Fahrbahn frei ist und daß somit der Anfahrvorgang eingeleitet werden kann.

In DE 199 24 142 wird kritisiert, daß die bekannten Verfahren zur Hinderniserkennung nicht immer die erforderliche Sicherheit bieten, insbesondere in den Fällen, in denen das Vorderfahrzeug, das bisher als Zielobjekt verfolgt wurde, infolge eines Abbiege- oder Asschervorgangs verlorengegangen ist. Es wird deshalb vorgeschlagen, daß, wenn die Analyse der Sensordaten ergibt, daß ein Anfahrvorgang eingeleitet werden sollte, zunächst nur der Fahrer einen Anfahrhinweis erhält, der eigentliche Anfahrvorgang jedoch erst eingeleitet wird, nachdem der Fahrer die Anfahrfreigabe bestätigt hat. In Stausituationen, in denen häufige Anhalte- und Anfahrvorgänge zu erwarten sind, wird jedoch das gehäufte Auftreten solcher Anfahrhinweise oft als störend empfunden.

Die DE 44 34 698 A1 beschreibt ein Abstandsregelsystem, das allein auf einer Videosensorik und zugehöriger Bildauswertung basiert, wobei unter anderem auch das Bild der Fahrbahnoberfläche erkannt wird.

Vorteile der Erfindung

Das erfindungsgemäße Verfahren mit den in Anspruch 1 angegebenen Merkmalen bietet eine erhöhte Sicherheit bei der automatischen Erkennung von Situationen, in denen ein Anfahrvorgang gefahrlos möglich ist.

Das erfindungsgemäße Verfahren beruht nicht, oder zumindest nicht allein, auf einer Erkennung von Hindernissen anhand vorgegebener Merkmale der Hindernisse, sondern vielmehr auf der positiven Erkennung von Merkmalen, die für eine hindernisfreie Fahrbahn charakteristisch sind. Dies hat gegenüber herkömmlichen Verfahren zur Hinderniserkennung den Vorteil, daß bei der Definition des Kriteriums, daß die Fahrbahn frei ist, nicht von vornherein bekannt zu sein braucht, welche Arten von Hindernissen sich auf der Fahrbahn befinden könnten und anhand welcher Merkmale diese Hindernisse zu erkennen wären. Das Verfahren ist deshalb insofern robuster und selektiver, als es auch auf Hindernisse unbekannter Art anspricht.

Spezieller besteht das Kriterium für eine hindernisfreie Fahrbahn darin, daß die beteiligten Sensoren in dem relevanten Abstandsbereich unmittelbar die freie Fahrbahn erkennen, d.h. also, daß der Blick auf die Fahrbahn nicht durch irgendwelche Hindernisse verstellt ist. Unabhängig von den beteiligten Sensorsystemen, beispielsweise Radarsystemen, monokularen oder stereoskopischen Videosystemen, Range-Imagern, Ultraschallsensoren und dergleichen sowie Kombinationen solcher Systeme, läßt sich eine hindernisfreie Fahrbahn dadurch charakterisieren, daß die Sensordaten durch eine "leere" Fahrbahnoberfläche dominiert werden, d.h., eine ausgedehnte Fläche mit geringer Textur, die allenfalls durch die üblichen Fahrbahnmarkierungen und -ränder mit bekannter Geometrie unterbrochen ist. Wenn ein solches Muster mit ausreichender Deutlichkeit in den Sensordaten zu erkennen ist, läßt sich mit hoher Sicherheit ausschließen, daß sich irgendwelche wie auch immer gearteten Hindernisse auf der Fahrbahn befinden.

Die Überprüfung des Kriteriums "freie Fahrbahn" kann sich wahlweise auf die gesamte Fahrbahnbreite beziehen oder auch nur auf einen ausgewählten Teil der Fahrbahn, z. B. den sogenannten Fahrkorridor, innerhalb dessen sich das eigene Fahrzeug voraussichtlich bewegen wird. Verfahren zur Bestimmung des Fahrkorridors, z. B. anhand der aus dem Lenkwinkel abgeleiteten Fahrbahnkrümmung, anhand der Videodaten, etc. sind im Stand der Technik bekannt.

Bei den zu treffenden Entscheidungen, beispielsweise der Entscheidung, ob ein Anfahrhinweis an den Fahrer ausgegeben werden soll oder nicht, oder bei der Entscheidung, ob ein Anfahrvorgang mit oder ohne Fahrerbestätigung ausgelöst werden soll, läßt sich durch Anwendung dieses Kriteriums die Häufigkeit von Fehlentscheidungen deutlich verringern. Aufgrund seiner hohen Selektivität eignet sich das Verfahren besonders für die Entscheidung, ob ein Anfahrvorgang automatisch, ohne Quittierung des Anfahrbefehls durch den Fahrer eingeleitet werden kann. Fehler können bei dem erfindungsgemäßen Verfahren am ehesten noch in der Form auftreten, daß eine freie Fahrbahn nicht als frei erkannt wird, beispielsweise aufgrund von ausgebesserten Stellen der Fahrbahndecke oder aufgrund von feuchten Flekken auf der Fahrbahn, die eine Struktur vortäuschen, die in Wahrheit kein relevantes Hindernis darstellt. Wenn in solchen eher seltenen Zweifelsfällen ein Anfahrhinweis ausgegeben wird, kann der Fahrer den Fehler ohne weiteres korrigieren, indem der den Anfahrbefehl bestätigt, nachdem er sich davon überzeugt hat, daß die Fahrbahn frei ist. In der Mehrzahl der Fälle wird dagegen die Freiheit der Fahrbahn automatisch erkannt, so daß keine Intervention des Fahrers erforderlich ist.

Ein Fahrerassistenzsystem zur Durchführung des Verfahrens ist Gegenstand des unabhängigen Anspruchs 15.

Vorteilhafte Ausgestaltungen und Weiterbildungen der Erfindung sind in den abhängigen Ansprüchen angegeben.

Zur Auswertung des Videobildes eigenen sich sowohl linienbasierte Verfahren, etwa die Auswertung der Bildinformation auf sogenannten Scanlines (Abtastzeilen), die im Videobild horizontal verlaufen und somit jeweils eine Zone im Vorfeld des Fahrzeugs repräsentieren, die in Fahrtrichtung gesehen einen konstanten Abstand zum Fahrzeug aufweist, oder wahlweise auf Scanlines, die parallel zur Fahrtrichtung (im Videobild also in Richtung Fluchtpunkt) verlaufen, als auch regionenbasierte Verfahren, bei denen zweidimensionale Regionen im Videobild analysiert werden.

Zweckmäßig ist eine Ermittlung des Grauwertes oder Farbwertes innerhalb der betreffenden Zeilen oder Regionen des Videobildes, da sich die Fahrbahnoberfläche (abgesehen von etwaigen Fahrbahnmarkierungen) durch eine im wesentlichen einheitliche Farbe und Helligkeit auszeichnet.

Ein hilfreiches Instrument zur Analyse des Videobildes ist die Erstellung eines Histogramms für die Farb- oder Grauwerte. Die Dominanz der Fahrbahnoberfläche führt im Histogramm zu einem ausgeprägten einzelnen Peak bei dem der Fahrbahnoberfläche entsprechenden Grauwert. Ein verteiltes Histogramm ohne ausgeprägte Dominanz eines einzelnen Peaks deutet hingegen auf das Vorhandensein von Hindernissen hin.

Ein solches Histogramm kann sowohl für Scanlines als auch für bestimmte Regionen des Videobildes oder das Bild als Ganzes erstellt werden.

Ein weiteres (linienbasiertes) Verfahren ist die Detektion und Analyse von Kanten im Videobild. Gerade Kanten und Linien wie etwa Fahrbahnmarkierungen und Fahrbahnränder, die in der Ebene der Fahrbahnoberfläche in Längsrichtung der Fahrbahn verlaufen, haben die Eigenschaft, daß sie sich, wenn man sie verlängert, in einem einzigen Fluchtpunkt schneiden. Kanten und Linien, die den seitlichen Begrenzungen von gegenüber der Fahrbahnoberfläche erhabenen Objekten darstellen, haben diese Eigenschaft hingegen nicht. So läßt sich anhand einer Analyse der Schnittpunkte der verlängerten Kanten entscheiden, ob das Videobild lediglich die leere Fahrbahn darstellt oder ob Hindernisse vorhanden sind.

Beispiele für an sich bekannte Algorithmen zur regionenbasierten Untersuchung des Videobildes sind das sogenannte Region-Growing sowie die Texturanalyse. Durch Region-Growing können zusammenhängende Regionen im Bild erkannt werden, die ähnliche Eigenschaften aufweisen, wie z. B. die leere Fahrbahnoberfläche. Ist dagegen der Blick auf Teile der Fahrbahnoberfläche durch Hindernisse verstellt, so ergibt sich beim Region-Growing keine zusammenhängende Region oder zumindest keine einfach zusammenhängende Region, sondern allenfalls eine Region mit einer oder mehreren "Inseln". Bei der Texturanalyse wird dem Videobild als Ganzes oder einzelnen Regionen des Videobildes ein Texturmaß zugeordnet. Eine freie Straße zeichnet sich durch wenig Textur und somit durch ein kleines Texturmaß aus, während Hindernisse im Videobild zu einem höheren Texturmaß führen.

Zeichnung

Ausführungsbeispiele der Erfindung sind in den Zeichnungen dargestellt und in der nachfolgenden Beschreibung näher erläutert.

Es zeigen:

| | |
|---|---|
| Figur 1 | ein Blockdiagramm eines erfindungsgemäßen Fahrerassistenzsystems; |
| Figuren 2 und 3 | Skizzen zur Erläuterung eines linienbasierten Verfahrens zur Auswertung eines Videobildes; |
| Figur 4 | ein Histogramm für eine freie Fahrbahn; |

Figur 5 ein Histogramm für eine Fahrbahn mit Hindernis;

Figur 6 eine bildliche Darstellung des Ergebnisses eines Region-Growing Prozesses für eine Fahrbahn mit Hindernis;

Figur 7 ein zur Bewegungsanalyse dienendes Differenzbild;

Figuren 8 und 9 Skizzen zur Erläuterung von Verfahren zur Bewegungsanlyse anhand eines optischen Flusses; und

Figur 10 ein Flußdiagramm für ein Verfahren gemäß einer Ausführungsform der Erfindung.

Beschreibung der Ausführungsbeispiele

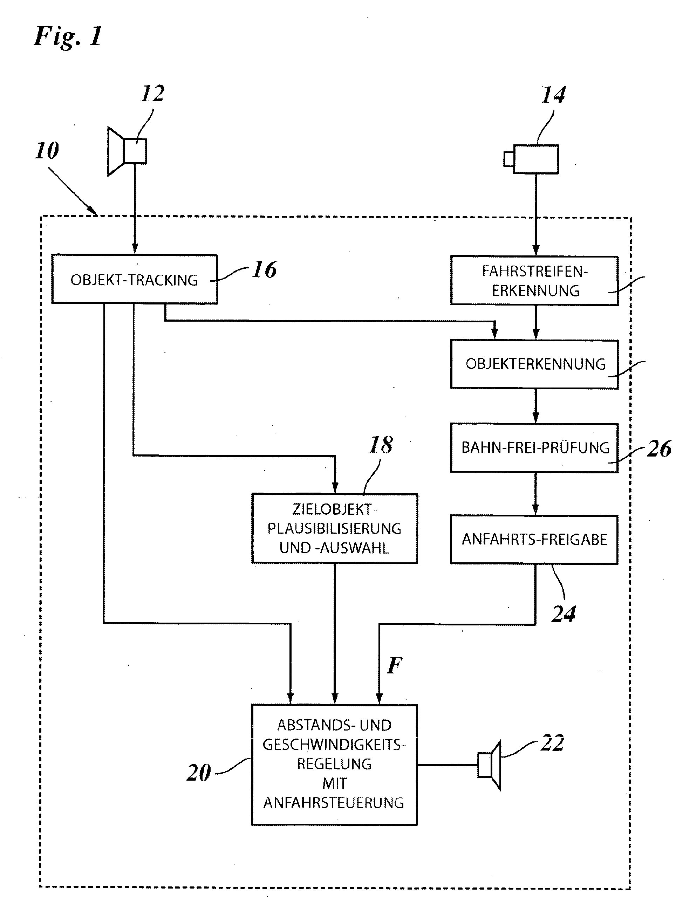

Als Beispiel für ein Fahrerassistenzsystem zeigt Figur 1 ein ACC-System 10, das Daten eines Radarsensors 12 und einer Videokamera 14 auswertet. Der Radarsensor und die Videokamera sind so im Fahrzeug eingebaut, daß sie das Vorfeld des Fahrzeugs überwachen. Anhand der Daten des Radarsensors 12 werden in einem Tracking-Modul 16 Objekte identifiziert, die ein Radar-Echo hervorgerufen haben, und diese Objekte werden in einer Objektliste zusammengestellt, und ihre Orts- und Bewegungsdaten werden über aufeinanderfolgende Meßzyklen des Radarsensors hinweg verfolgt. Sofern mindestens ein Objekt geortet wurde, wird in einem Plausibilisierungsmodul 18 entschieden, ob eines der georteten Objekte ein unmittelbar auf der eigenen Spur vorausfahrendes Fahrzeug ist, und dieses Objekt wird als Zielobjekt für die Abstandsregelung ausgewählt. Die eigentliche Abstandsregelung erfolgt dann aufgrund der Grundlage der vom Tracking-Modul 16 bereitgestellten Daten über das Zielobjekt in einem Regler 20, der ebenso wie die übrigen Komponenten des ACC-Systems vorzugsweise als Software in einer elektronischen Datenverarbeitungsanlage implementiert ist. Der Regler 20 greift in das Antriebssystem und das Bremssystem des Fahrzeugs ein, um dessen Geschwindigkeit so zu regeln, daß das Zielobjekt mit einer angemessenen Zeitlücke verfolgt wird.

Wenn kein Zielobjekt vorhanden ist, erfolgt eine Regelung auf eine vom Fahrer gewählte Wunschgeschwindigkeit.

Der Regler 20 des hier beschriebenen ACC-Systems weist eine sogenannte Stop & Go Funktion auf, d.h., er ist in der Lage, das eigene Fahrzeug auch in den Stand zu bremsen, wenn das Zielobjekt anhält. Ebenso ist der Regler 20 in der Lage, einen automatischen Anfahrvorgang zu steuern, wenn sich das Zielobjekt wieder in Bewegung setzt oder aufgrund eines Abbiege- oder Ausschervorgangs seitlich aus dem Ortungsbereich des Radarsensors auswandert. Unter bestimmten Bedingungen wird der Anfahrvorgang jedoch nicht automatisch eingeleitet, sondern es wird nur über eine Mensch/Maschine-Schnittstelle 22 ein Anfahrhinweis an den Fahrer ausgegeben, und der Anfahrvorgang wird erst dann eingeleitet, wenn der Fahrer den Anfahrbefehl bestätigt. Die Entscheidung, ob ein Anfahrvorgang sofort automatisch ausgelöst werden kann oder erst nach Fahrerbestätigung, trifft ein Freigabemodul 24 auf der Grundlage der Ergebnisse eines Prüfmoduls 26, das in erster Linie das von der Videokamera 14 aufgenommene Bild auswertet, um sicherzustellen, daß sich keine Hindernisse im Anfahrbereich auf der Fahrbahn befinden. Wenn die Fahrbahn frei ist, liefert das Freigabemodul 24 an den Regler 20 ein Anfahrfreigabesignal F. Der Regler leitet den automatischen Anfahrvorgang (ohne Anfahrhinweis) nur dann ein, wenn das Anfahrfreigabesignal F vorliegt, und überprüft ggf. noch weitere Bedingungen, die für einen automatischen Anfahrvorgang erfüllt sein müssen, z. B. die Bedingung, daß seit dem Stillstand des Fahrzeugs nicht mehr als eine bestimmte Zeitspanne von z. B. 3 Sekunden vergangen ist.

Im gezeigten Beispiel sind dem Prüfmodul 26 noch ein Objekterkennungsmodul 28 und ein Fahrstreifen-Erkennungsmodul 30 vorgeschaltet.

Im Objekterkennungsmodul 28 wird das Videobild auf das Vorhandensein bestimmter vordefinierter Klassen von Objekten überprüft, die als Hindernis in Frage kämen, also beispielsweise Pkw und Lkw, Zweiräder, Fußgänger und dergleichen. Diese Objekte sind in bekannter Weise durch vordefinierte Merkmale charakterisiert, nach denen dann im Videobild gesucht wird. Außerdem werden im gezeigten Beispiel im Objekterkennungsmodul 28 die Daten der Videokamera 14 mit den Daten des Radarsensors 12 fusioniert, so daß ggf. ein vom Radarsensor geortetes Objekt im Videobild identifiziert werden kann und umgekehrt. So ist es beispielsweise möglich, daß sich ein vom Radarsensor geortetes Objekt in dem Objekterkennungsmodul 28 anhand des Videobildes als eine auf der Straße liegende Blechdose identifizieren läßt, die kein relevantes Hindernis darstellt. Wenn jedoch das Objekterkennungsmodul 28 ein Objekt erkennt und als echtes Hindernis bewertet, so kann die Prüfung im Prüfmodul 26 übersprungen werden, und das Freigabemodul 24 wird angewiesen, einen automatischen Anfahrvorgang nur nach Fahrerbestätigung zuzulassen oder, alternativ, erst gar keinen Anfahrhinweis an den Fahrer auszugeben.

Das Fahrstreifen-Frkennungsmodul 30 ist so programmiert, daß es im Videobild bestimmte vordefinierte Fahrbahnmarkierungen erkennt, beispielsweise linke und rechte Fahrbahnrandmarkierungen, durchgehende oder unterbrochene Mittelstreifen oder Spurmarkierungen, Haltelinien an Kreuzungen und dergleichen. Die Erkennung solcher Markierungen erleichtert und verbessert die weiter unten beschriebene Prüfungsprozedur im Prüfmodul 26. Zugleich kann das Ergebnis der Fahrstreifenerkennung auch dazu benutzt werden, im Plausibilisierungsmodul 18 die Zuordnung der vom Radarsensor 12 georteten Objekte zu den verschiedenen Fahrspuren zu verbessern.

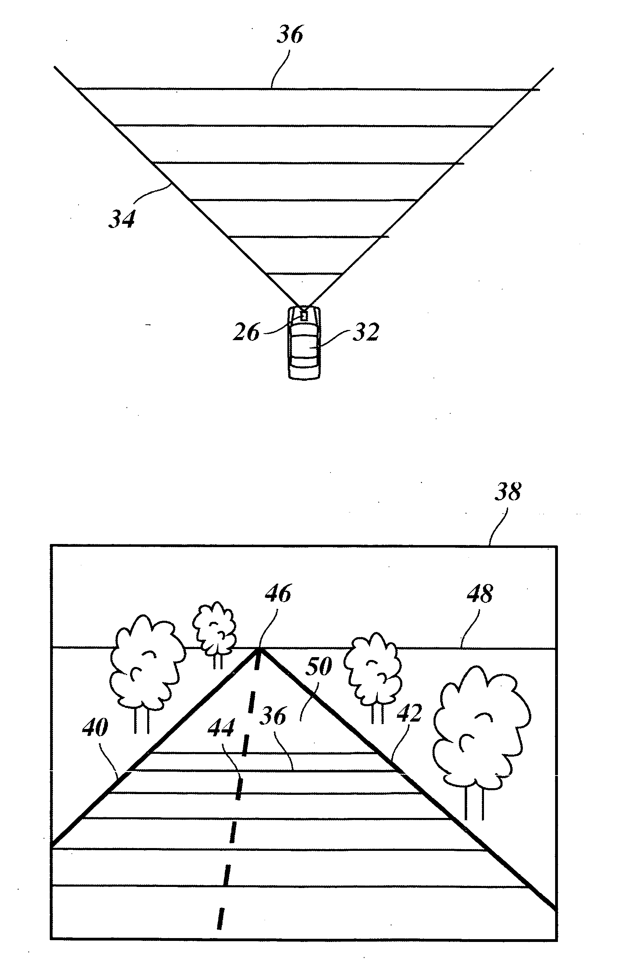

Das Prüfmodul 26 führt an dem Videobild der Videokamera 14 eine Reihe von Überprüfungen durch, die jeweils das Ziel haben, Merkmale zu erkennen, die spezifisch für eine freie Fahrbahn kennzeichnend sind, also bei einer durch Hindernisse verstellten Fahrbahn nicht auftreten. Ein Beispiel für eine dieser Prüfprozeduren wird nun anhand der Figuren 2 bis 5 näher erläutert.

Figur 2 zeigt in einem schematischen Grundriß ein Fahrzeug 32, das mit dem ACC-System 10 nach Figur 1 ausgerüstet ist, sowie das Vorfeld 34 der Videokamera 14, d. h., den Bereich der Oberfläche der Fahrbahn und des daran angrenzenden Geländes, der im Videobild sichtbar ist. Dieses Vorfeld 34 ist in mehrere quer zur Längsachse des Fahrzeugs 32 verlaufende Bänder oder Zeilen 36 (Scanlines) aufgeteilt, die unterschiedlichen Abständen zum Fahrzeug 32 entsprechen, beispielsweise 5 m, 10 m, etc.

Figur 3 zeigt das zugehörige Videobild 38. Man erkennt Fahrbahnmarkierungen 40, 42 und 44 für die linken und rechten Fahrbahngrenzen und einen Mittelstreifen. Diese Markierungslinien erscheinen im Videobild als Geraden, die sich alle in einem Fluchtpunkt 46 am Horizont 48 schneiden. Auf der Fahrbahnoberfläche 50 sind die bereits im Zusammenhang mit Figur 2 beschriebenen Zeilen 36 eingezeichnet.

Für die Entscheidung, daß die Fahrbahn in dem für den Anfahrvorgang relevanten unteren Abstandsbereich frei ist (wie in Figur 3) bieten sich nun verschiedene Kriterien an. Eines dieser Kriterien besteht darin, daß in dem relevanten Abstandsbereich die Bildpixel der Zeilen 36, die ganz oder überwiegend innerhalb der Fahrbahnoberfläche 50 liegen, praktisch (abgesehen von Bildrauschen) alle eine einheitliche Farbe haben, nämlich die Farbe der Fahrbahnoberfläche. Im Falle eines Schwarz/Weiß-Bildes gilt entsprechendes für den Grauwert. Zur Überprüfung dieses Kriteriums stehen verschiedene, im Prinzip bekannte Algorithmen zur Verfügung.

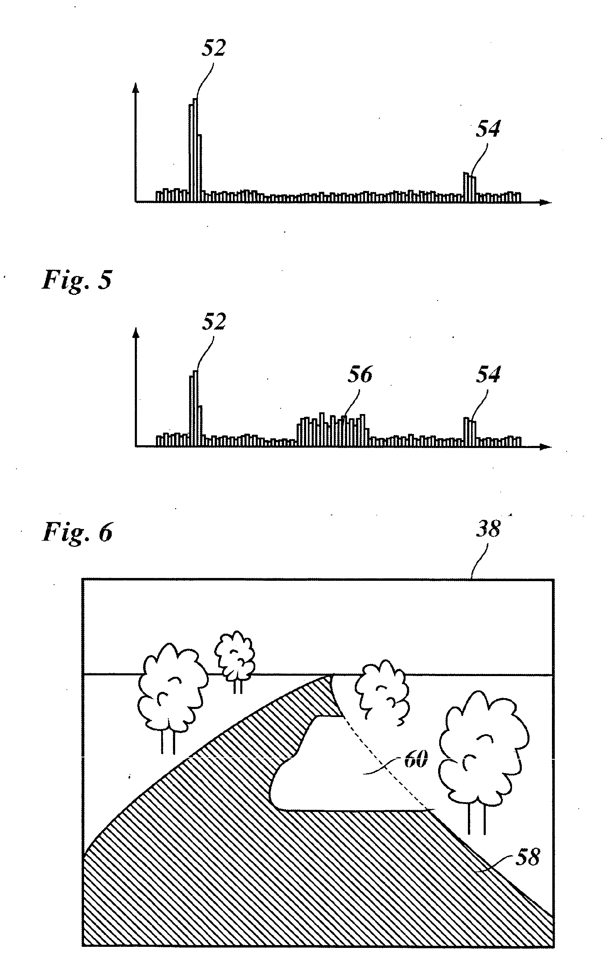

Besonders zweckmäßig ist eine Histogramm-Analyse, wie sie in Figuren 4 und 5 dargestellt ist. In einem solchen Histogramm, das für jede der Zeilen 36 erstellt werden kann, ist für jeden möglichen Helligkeitswert L (Luminanz) die Anzahl der Pixel der betreffenden Zeile angegeben, die diesen Helligkeitswert haben. Im Falle eines Farbbildes kann ein entsprechendes Histogramm für jeden der drei Farbauszüge R, G und B erstellt werden.

Figur 4 zeigt ein typisches Beispiel eines Histogramms für eine freie Fahrbahn. Charakteristisch ist daran, daß es im Histogramm nur einen sehr ausgeprägten Peak 52 gibt, der den Helligkeitswert der Fahrbahnoberfläche 50 repräsentiert. Ein schwächerer Peak 54 bei sehr großen Helligkeitswerten repräsentiert die weißen Fahrbahnmarkierungen 40, 42, 44.

Zum Vergleich zeigt Figur 5 ein entsprechendes Histogramm für eine Fahrbahn, auf der sich mindestens ein unbekanntes Hindernis befindet. Hier ist der Peak 52 weniger ausgeprägt und vor allem gibt es zusätzlich mindestens einen weiteren Peak 56, der die Helligkeitswerte des Hindernisses repräsentiert.

Wenn sich bei der Analyse des Histogramms für alle Zeilen 36 im relevanten Abstandsbereich das in Figur 4 gezeigte Muster ergibt, kann man somit sicher sein, daß die Fahrbahn frei ist.

Wenn, wie in Figur 1, ein Fahrstreifen-Erkennungsmodul vorhanden ist, läßt sich die Selektivität des Verfahrens noch steigern, indem die erkannten Fahrbahnmarkierungen aus dem Bild ausgeblendet werden, so daß der Peak 54 im Histogramm verschwindet. Weiterhin ist es möglich, das Videobild 38 (Figur 3) vor der zeilenbasierten Analyse so zu beschneiden, daß insbesondere bei größeren Abständen die Bildbereiche ausgeblendet werden, die typischerweise außerhalb der Fahrbahnoberfläche 50 liegen. Dies ist naturgemäß besonders einfach, wenn die Fahrbahnmarkierungen 40 und 42 für die linken und rechten Fahrbahnränder bereits im Fahrstreifen-Erkennungsmodul 30 erkannt wurden.

In einer alternativen Ausführungsform ist es natürlich auch möglich, die Histogramm-Analyse nicht auf der Basis einzelner Zeilen 36, sondern für das gesamte Bild oder für einen geeignet gewählten Teil des Bildes vorzunehmen.

Ein weiteres Kriterium für die Entscheidung, daß die Fahrbahn frei ist, beruht auf bekannten Algorithmen zur Erkennung von Kanten oder Linien in einem Videobild. Bei einer freien (und geraden) Fahrbahn sollten, insbesondere wenn man das Bild in der oben beschriebenen Weise geeignet beschneidet, die einzigen Kanten oder Linien diejenigen sein, die durch die Fahrbahnmarkierungen und Fahrbahnränder sowie ggf. Bordsteinkanten und dergleichen hervorgerufen werden. Diese haben, wie bereits erwähnt wurde, die Eigenschaft, daß sie sich alle im Fluchtpunkt 46 schneiden (bei gekrümmter Fahrbahn gilt dies jeweils innerhalb hinreichend kurzer Fahrbahnabschnitte, in denen die Linen annähernd gerade sind). Wenn sich Hindernisse auf der Fahrbahn befinden, treten dagegen auch Kanten oder Linien auf, die durch die seitlichen, annähernd vertikalen Begrenzungen des Hindernisses gebildet werden und die nicht das Kriterium erfüllen, daß sie sich im Fluchtpunkt 46 schneiden. Außerdem treten bei Hindernissen, insbesondere bei von Menschen gefertigten Objekten, typischerweise auch horizontale Kanten oder Linien auf, die auf einer freien Fahrbahn nicht vorhanden sind, allenfalls abgesehen von quer über die Fahrbahn verlaufenden Haltelinien, die gegebenenfalls mit Hilfe des Fahrstreifen-Erkennungsmoduls 30 erkannt werden können.

Ein Beispiel für eine regionenbasierte Untersuchung ist ein Region-Growing Algorithmus. Dieser Algorithmus beginnt damit, daß zunächst für einen relativ kleinen Bildbereich, vorzugsweise im unteren Teil in der Mitte des Bildes, die Eigenschaften, beispielsweise die Farbe, der Grauwert oder die Feintextur (Rauhigkeit der Fahrbahnoberfläche) bestimmt werden. Bei einer freien Fahrbahn wird diese kleine Region einen Teil der Fahrbahnoberfläche 46 repräsentieren. Diese Region wird dann nach und nach in allen Richtungen erweitert, in denen die Eigenschaften annähernd mit denen in der ursprünglichen Region übereinstimmen. Schließlich erhält man auf diese Weise eine Region, die der gesamten im Videobild sichtbaren Fahrbahnoberfläche 50 entspricht.

Bei einer freien Fahrbahn sollte diese Region eine zusammenhängende Fläche ohne Unterbrechungen und Inseln sein. Je nach räumlicher Auflösung könnten sich gegebenenfalls die unterbrochenen Fahrbahnmarkierungen 44 für den Mittelstreifen als Inseln abzeichnen, sofern sie nicht mit Hilfe des Fahrstreifen-Erkennungsmoduls 30 eliminiert wurden. Wenn sich dagegen ein Hindernis auf der Fahrbahn befindet, weist die Region an der Stelle des Hindernisses eine Lücke auf, wie als Beispiel in Figur 6 gezeigt ist. Die als Ergebnis des Region-Growing Prozesses erhaltene Region 58 ist in Figur 6 schraffiert dargestellt und weist eine Lücke in der Form einer Bucht 60 auf, die durch ein Hindernis, beispielsweise ein Fahrzeug, verursacht wird.

Bei einer anderen Hinderniskonstellation könnten das Hindernis oder die Hindernisse die Region 58 auch in zwei völlig getrennte Gebiete aufteilen. Um solche Fälle zu erfassen, ist es denkbar, das Region-Growing (für dieselben Eigenschaften) auch noch von anderen Punkten des Bildes aus starten zu lassen. Im unmittelbaren Vorfeld des Fahrzeugs, auf das es für den Anfahrprozeß allein ankommt, treten solche Konstellationen jedoch im allgemeinen nicht auf. Hier werden sich deshalb Hindernisse entweder als Inseln oder als Buchten (wie in Figur 6) abzeichnen.

Ein einfaches Kriterium für die Feststellung, daß die Fahrbahn frei ist, besteht deshalb darin, daß die als Ergebnis des Region-Growing Prozesses erhaltene Region 58 im mathematischen Sinne konvex ist, d. h., daß zwei beliebige Punkte innerhalb dieser Region durch eine Gerade verbunden werden können, die ebenfalls ganz innerhalb dieser Region liegt. Dieses Kriterium beruht auf der vereinfachenden Annahme, daß die Fahrbahngrenzen gerade sind. Diese Annahme ist zumindest im Nahbereich weitgehend erfüllt. Eine Verfeinerung des Kriteriums könnte darin bestehen, daß die seitlichen Begrenzungen der Region 58 durch Polynome niedrigen Grades, beispielsweise durch Parabeln, approximiert werden können.

Ein weiteres Kriterium für die Feststellung, daß die Fahrbahn frei ist, beruht auf einer Texturanalyse des Videobildes, entweder für das Bild als Ganzes oder für geeignet ausgewählte Teilbereiche des Bildes. Die Fahrbahnoberfläche 50 weist praktisch keine Textur auf, abgesehen von einer Feintextur, die durch die Rauhigkeit der Fahrbahnoberfläche hervorgerufen wird und die durch geeignete Wahl des Texturfilters eliminiert werden kann. Hindernisse auf der Fahrbahn führen dagegen dazu, daß das Bild oder der betrachtete Teilbereich des Bildes ein wesentlich höheres Texturmaß aufweist.

Bei den regionenbasierten Kriterien ist auch der Einsatz eines trainierten Klassifikators denkbar. Solche Klassifikatoren sind lernfähige Analysealgorithmen, die vorab mit Hilfe von definierten Beispielsituationen trainiert werden, so daß sie dann in der Lage sind, mit hoher Zuverlässigkeit zu erkennen, ob der untersuchte Bildausschnitt zu der trainierten Klasse "Straße frei" gehört.

Ein notwendiges aber nicht hinreichendes Kriterium für eine freie Fahrbahn besteht außerdem darin, daß in dem relevanten Bildausschnitt, der dem unmittelbaren Vorfeld des Fahrzeugs entspricht, keine Bewegungen, insbesondere keine Querbewegungen auftreten dürfen. Der Bildausschnitt sollte dabei so begrenzt werden, daß Bewegungen von Personen, die durch die Heckscheibe des Vorderfahrzeugs sichtbar sind, unberücksichtigt bleiben. Sofern auch Längsbewegungen berücksichtigt werden, sind außerdem die Bewegungen im Videobild zu eliminieren, die aus dem Anfahren des Vorderfahrzeugs resultieren.

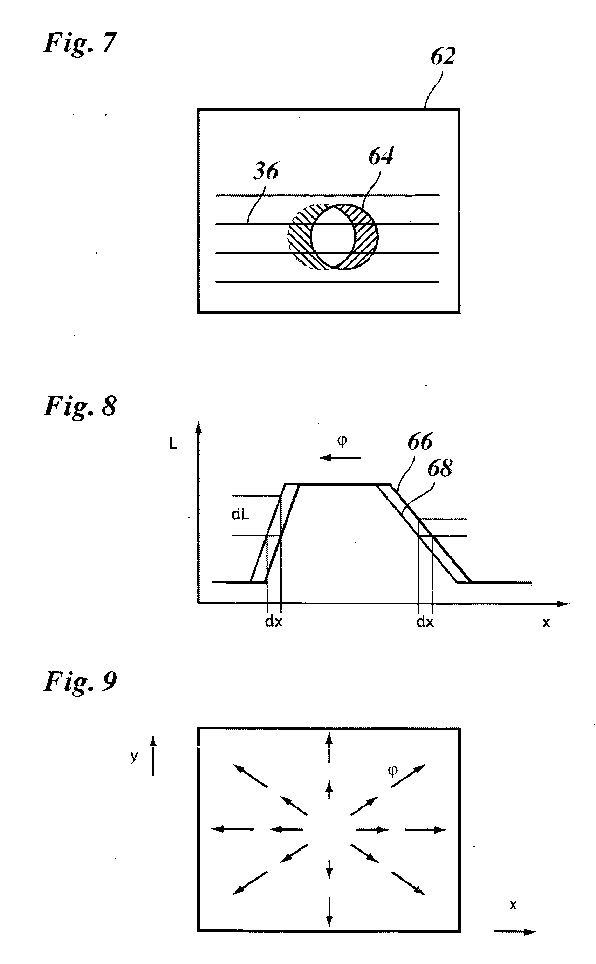

Wenn das eigene Fahrzeug steht, lassen sich Bewegungen einfach erkennen, indem das Differenzbild zwischen zwei kurz hintereinander aufgenommenen Videobildern ausgewertet wird Wenn keine Bewegungen auftreten, hat das Differenzbild (z. B. die Differenz zwischen den Helligkeitswerten der beiden Bilder) über einen Wert null. Figur 7 zeigt dagegen als Beispiel ein Differenzbild 62 für einen quer über die Fahrbahn rollenden Ball 64. Die Bewegung des Balls verursacht zwei sichelförmige Zonen mit von null verschiedener Helligkeitsdifferenz, die in Figur 7 schraffiert dargestellt sind. Wenn nur Querbewegungen erkannt werden sollen, kann die Analyse wieder auf die waagerechten Zeilen 36 (Scanlines) beschränkt werden. Wenn man verlangt, daß die Bewegung in mindestens zwei Zeilen 36 erkannt werden muß, läßt sich durch den Abstand der Zeilen 36 die Mindestgröße der bewegten Objekte vorgeben, die als Hindernis erkannt werden sollen.

Ein differenzierteres Verfahren zur Erkennung von Bewegungen beruht auf der Berechnung des sogenannten optischen Flusses. Dieser optische Fluß ist ein Vektorfeld, das den Betrag und die Richtung angibt, in der sich Strukturen im Videobild bewegen.

Eine Möglichkeit zur Berechnung des optischen Flusses illustriert Figur 8 zunächst für den eindimensionalen Fall, d. h., für den optischen Fluß in j in horizontaler Richtung x des Videobildes, also für Bewegungen quer zur Fahrtrichtung. Die fett eingezeichnete Kurve 66 in Figur 8 gibt (für eine Bildzeile) die Helligkeit L eines Objektes in Abhängigkeit von der Ortskoordinate x an. Im gezeigten Beispiel hat das Objekt in einem zentralen Bereich einen konstanten, relativ großen Helligkeitswert, und an den linken und rechten Flanken fällt die Helligkeit unterschiedlich steil ab. Die dünner eingezeichnete Kurve 68 in Figur 8 zeigt dieselbe Helligkeitsverteilung nach Ablauf einer kurzen Zeitspanne dt, in der sich das Objekt um die Distanz dx nach links bewegt hat. Der optische Fluß j, der die Bewegung des Objekts charakterisiert, ist gegeben durch j = dx/dt.

Auf den Flanken der Helligkeitskurve kann man nun zum einen die räumliche Ableitung dL/dx der Helligkeit und zum anderen die zeitliche Ableitung dL/dt bilden, und es gilt:

$$dL/dt = j \cdot dL/dx.$$

Wenn dL/dx ungleich null ist, läßt sich der optische Fluß j berechnen:

$$j = (dL/dt)/(dL/dx).$$

Diese Analyse kann für jeden einzelnen Bildpunkt auf einer oder mehreren Zeilen 36 oder auch für das gesamte Videobild ausgeführt werden, und man erhält so die räumliche Verteilung der Längs- oder x-Komponente des Flusses j in den betrachteten Bildbereichen.

Die Vertikal- oder y-Komponente des optischen Flusses läßt sich auf analoge Weise berechnen, so daß man letztlich ein zweidimensionales Vektorfeld erhält, das die Bewegungen aller Strukturen im Bild wiedergibt. Für eine unbewegte Szenerie muß der optische Fluß überall verschwinden, abgesehen von Bildrauschen und Rechenungenauigkeiten. Wenn sich bewegte Objekte im Bild befinden, läßt die Verteilung des optischen Flusses die Form und Größe der Objekte sowie den Betrag und die Richtung ihrer Bewegung im x-y-Koordinatensystem des Videobildes erkennen.

Dieses Verfahren läßt sich auch dann zur Erkennung von bewegten Objekten einsetzen, wenn das eigene Fahrzeug in Bewegung ist. Die Eigenbewegung des Fahrzeugs führt nämlich bei einer freien Fahrbahn zu einem charakteristischen Verteilungsmuster des optischen Flusses j, wie schematisch in Figur 9 dargestellt ist. Abweichungen von diesem Muster deuten auf das Vorhandensein von bewegten Objekten hin.

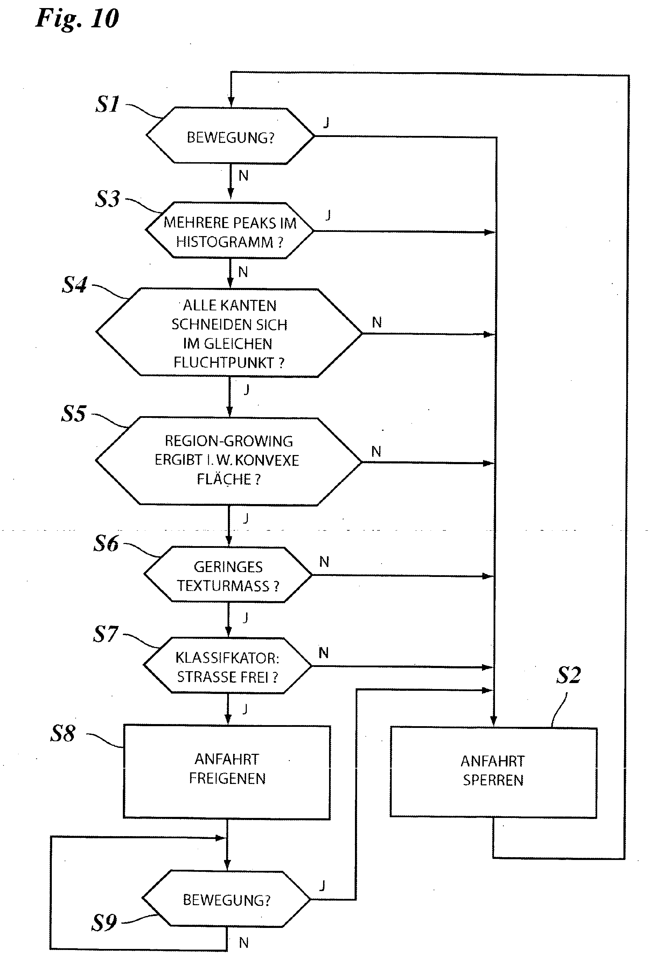

Figur 10 zeigt ein Flußdiagramm für ein Beispiel eines im Prüfmodul 26 in Figur 1 auszuführenden Verfahrens, das die oben beschriebenen Prüfkriterien miteinander kombiniert.

In Schritt S1 wird durch Differenzbildanalyse oder durch Berechnung des optischen Flusses festgestellt, ob sich bewegte Objekte, also potenzielle Hindernisse, im relevanten Ausschnitt des Videobildes befinden. Wenn dies der Fall ist (J), so wird dieses Teilkriterium für eine freie Fahrbahn nicht erfüllt und es wird zu Schritt S2 verzweigt, und das Freigabemodul 24 wird veranlaßt, die automatische Einleitung des Anfahrvorgangs zu sperren. Es wird dann nur ein Anfahrhinweis ausgegeben, und der Anfahrvorgang beginnt nur dann, wenn der Fahrer daraufhin den Anfahrbefehl bestätigt.

Andernfalls (N) wird in Schritt S3 durch Histogramm-Analyse festgestellt, ob es zumindest für eine der Zeilen 36 im Histogramm mehrere Peaks gibt (wie in Figur 5).

Wenn das in Schritt S3 geprüfte Kriterium erfüllt ist (N), so wird in Schritt S4 geprüft, ob sich alle im Bild identifizierten geraden Kanten in einem einzigen Fluchtpunkt schneiden (entsprechend dem oben anhand von Figur 3 erläuterten Kriterium). Ist dies nicht der Fall, wird wieder nach Schritt S2 verzweigt.

Andernfalls wird in Schritt S5 geprüft, ob das Region-Growing eine im wesentlichen (d.h. abgesehen von der Krümmung der Fahrbahnränder) konvexe Fläche ergibt. Ist dies nicht der Fall, wird wieder nach Schritt S2 verzweigt.

Andernfalls wird in Schritt S6 geprüft, ob das für das Bild ermittelte Texturmaß unterhalb eines geeignet gewählten Schwellenwertes liegt. Ist dies nicht der Fall, wird wieder nach Schritt S2 verzweigt.

Andernfalls wird in Schritt S7 geprüft, ob auch der trainierte Klassifikator eine freie Fahrbahn erkennt. Ist dies nicht der Fall, wird wieder nach Schritt S2 verzweigt. Wenn dagegen auch das Kriterium in Schritt S7 erfüllt ist (J), so bedeutet dies, daß alle geprüften Kriterien auf eine freie Fahrbahn hinweisen, und in Schritt S8 wird das Anfahrtfreigabesignal F erzeugt und damit die automatische Einleitung des Anfahrvorgangs ohne vorherigen Anfahrhinweis zugelassen.

Im Anschluß daran wird, zumindest solange das Fahrzeug noch nicht tatsächlich angefahren ist, in einer Schleife zyklisch ein Schritt S9 ausgeführt, in dem analog zu Schritt S1 Bewegungen im Videobild erkannt werden. Falls sich in diesem Stadium ein Hindernis in das Vorfeld des Fahrzeugs bewegen sollte, so wird es anhand seiner Bewegung erkannt, und die Schleife wird mit Schritt S2 verlassen, so daß die Fahrtfreigabe wieder aufgehoben wird.

Im Anschluß an Schritt S2 erfolgt ein Rücksprung zu S1, wo erneut Bewegungen detektiert werden. Die Schritte S 1 und S2 werden dann in einer Schleife solange wiederholt, wie die Bewegung anhält. Wenn in Schritt S1 keine Bewegung mehr festgestellt wird, so wird die Schleife über Schritt S3 verlassen, und in den Schritten S3 bis S7 wird geprüft, ob sich das Hindernis noch auf der Fahrbahn befindet oder die Fahrbahn frei gemacht hat.

Um unnötige Rechenarbeit zu sparen, kann in einer modifizierten Ausführungsform immer dann ein Flag gesetzt werden, wenn der Schritt S2 über einen der Schritte S3 bis S7 erreicht wird, d. h., wenn ein unbewegtes Hindernis erkannt wurde. Dieses Flag bewirkt dann, daß in Schritt S1 bei einem negativen Ergebnis (N) nach Schritt S2 verzweigt wird und bei einem positiven Ergebnis (J) ebenfalls nach Schritt S2 verzweigt wird und außerdem das Flag zurückgesetzt wird. Dahinter steht die Überlegung, daß das Hindernis nicht von der Fahrbahn verschwinden kann, ohne sich zu bewegen. Die Scheife S1-S2 wird dann über Schritt S3 verlassen, sobald keine Bewegung mehr festgestellt wird.

**Patentansprüche**

1. Verfahren zur Anfahrtsteuerung eines Kraftfahrzeugs (32), bei dem das Vorfeld (34) des Fahrzeugs mit Hilfe einer Sensoreinrichtung erfaßt wird, die einen Radarsensor (12) sowie eine Videokamera (14) einschließt, und nach einem Halt des Fahrzeugs automatisch ein Anfahrfreigabesignal (F) ausgegeben wird, wenn die Verkehrssituation es erlaubt, wobei aus den Daten der Videokamera (14) Merkmale der Fahrbahn im Vorfeld (34) des Fahrzeugs extrahiert werden, auf das Videobild (38) eine Objekterkennungsprozedur angewandt wird, um Objekte im Videobild anhand vordefinierter Merkmale zu erkennen, und mindestens ein Kriterium überprüft wird, das anzeigt, daß die Fahrbahn frei ist, **dadurch gekennzeichnet, daß**

   - mindestens ein Freigabekriterium geprüft wird, das verlangt, daß in dem Videobild (38) das Abbild der einheitlich beschaffenen Fahrbahnoberfläche (50) dominiert und eine der Fahrbahnoberfläche (50) entsprechende Region (58) im Videobild frei von Inseln oder Buchten (60) ist,
   - die Überprüfung des Freigabekriteriums eine Texturanalyse einschließt,
   - die aus dem Videobild (38) extrahierten Merkmale gerade Linien (40, 42, 44) umfassen und ein weiteres Freigabekriterium überprüft wird, das darin besteht, daß das Bild nur Linien (40, 42, 44) enthält, deren Verlängerungen sich in einem einzigen Fluchtpunkt (46) schneiden,
   - das Anfahrfreigabesignal (F) nur dann ausgegeben wird, wenn alle Freigabekriterien erfüllt sind, und
   - die Objekterkennungsprozedur die Suche nach vordefinierten Merkmalen von Hindernissen einschließt und, wenn Merkmale eines Hindernisses erkannt werden, ohne weitere Überprüfung der Freigabekriterien die automatische Ausgabe des Anfahrfreigabesignals (F) unterdrückt wird.

2. Verfahren nach Anspruch 1, **dadurch gekennzeichnet, daß** die Überprüfung des Freigabekriteriums auf der Basis von Zeilen (36) des Videobildes erfolgt, die jeweils einer Zone der Fahrbahnoberfläche (50) in einem bestimmten Abstand vor dem Fahrzeug (32) entsprechen.

3. Verfahren nach Anspruch 1 oder 2, **dadurch gekennzeichnet, daß** die Überprüfung des Freigabekriteriums durch Histogramm-Analyse erfolgt.

4. Verfahren nach einem der Ansprüche 1 bis 3, **dadurch gekennzeichnet, daß** die Überprüfung der Freigabekriterien einen Region-Growing Prozeß einschließt.

5. Verfahren nach einem der Ansprüche 1 bis 4, **dadurch gekennzeichnet, daß** das Videobild mit Hilfe eines auf eine freie Fahrbahn trainierten Klassifikators analysiert wird und ein weiteres Freigabekriterium darin besteht, daß der Klassifikator eine freie Fahrbahn erkennt.

6. Verfahren nach einem der Ansprüche 1 bis 5, **dadurch gekennzeichnet, daß** die Objekterkennungsprozedur die Suche nach vordefinierten Merkmalen von Objekten (40, 42, 44) einschließt, die keine Hindernisse sind, und daß die so erkannten Merkmale bei der Überprüfung der Freigabekriterien unberücksichtigt bleiben.

7. Verfahren nach einem der Ansprüche 1 bis 6, **dadurch gekennzeichnet, daß** das Videobild einer Bewegungsanalyse unterzogen wird und daß Objekte anhand ihrer Bewegung im Videobild erkannt werden.

8. Fahrerassistenzsystem für Kraftfahrzeuge, **dadurch gekennzeichnet, daß** es zur Durchführung des Verfahrens nach einem der Ansprüche 1 bis 7 ausgebildet ist.

**Claims**

1. Method for assisting a driver in driving off a motor vehicle (32), in which the area (34) in front of the vehicle is sensed using a sensor device which includes a radar sensor (12) and a video camera (14), and, after the vehicle stops, a driving off enable signal (F) is output automatically if the traffic situation permits it, wherein carriageway features in the area (34) in front of the vehicle are extracted from the data of the video camera (14), an object-detection procedure is applied to the video image (38) in order to detect objects in the video image on the basis of predefined features, and at least one criterion which indicates that the carriageway is free is checked, **characterized in that**

   - at least one enable criterion which requires that the image of the carriageway surface (50) which is constructed in a uniform fashion is dominant in the video image (38) and a region (58) in the video image which corresponds to the carriageway surface (50) is free of islands or bays (60),
   - the checking of the enable criterion includes a texture analysis,
   - the features which are extracted from the video image (38) comprise straight lines (40, 42, 44), and a further enable criterion is checked which consists in the fact that the image contains only lines (40, 42, 44) whose elongations intersect at a single vanishing point (46),
- the driving off enable signal (F) is output only if all the enable criteria are met, and
- the object-detection procedure includes searching for predefined features of obstacles, and if features of an obstacle are detected without further checking of the enable criteria, the automatic outputting of the driving off enable signal (F) is suppressed.

2. Method according to Claim 1, **characterized in that** the enable criterion is checked on the basis of lines (36) of the video image which respectively correspond to a zone of the carriageway surface (50) at a certain distance in front of the vehicle (32).

3. Method according to Claim 1 or 2, **characterized in that** the enable criterion is checked by means of histogram analysis.

4. Method according to one of Claims 1 to 3, **characterized in that** the checking of the enable criteria includes a region-growing process.

5. Method according to one of Claims 1 to 4, **characterized in that** the video image is analysed using a classifier which is trained to a free carriageway, and a further enable criterion consists in the fact that the classifier detects a free carriageway.

6. Method according to one of Claims 1 to 5, **characterized in that** the object-detection procedure includes searching for predefined features of objects (40, 42, 44) which are not obstacles, and **in that** the features which are detected in this way are not taken into account in the checking of the enable criteria.

7. Method according to one of Claims 1 to 6, **characterized in that** the video image is subjected to a movement analysis, and **in that** objects are detected on the basis of their movement in the video image.

8. Driver assistance system for motor vehicles, **characterized in that** said system is designed to carry out the method according to one of Claims 1 to 7.

**Revendications**

1. Procédé de commande du démarrage d'un véhicule automobile (32), avec lequel le champ avant (34) du véhicule est détecté à l'aide d'un dispositif de détection, lequel inclut un détecteur radar (12) ainsi qu'une caméra vidéo (14), et un signal de validation du démarrage (F) est émis automatiquement après un arrêt du véhicule lorsque la situation du trafic le permet, des caractéristiques de la voie de circulation dans le champ avant (34) du véhicule étant extraites à partir des données de la caméra vidéo (14), une procédure de reconnaissance d'objet étant appliquée à l'image vidéo (38) afin de reconnaître les objets dans l'image vidéo au moyen de caractéristiques prédéfinies, et au moins un critère étant contrôlé, lequel indique que la voie de circulation est libre, **caractérisé en ce que**

- un contrôle est appliqué à au moins un critère de validation qui exige que la représentation de la surface de la voie de circulation (50) à structure homogène soit dominante dans l'image vidéo (38) et qu'une région (58) correspondant à la surface de la voie de circulation (50) dans l'image vidéo soit exempte d'îlots ou de baies (60),
- le contrôle du critère de validation inclut une analyse de la texture,
- les caractéristiques extraites de l'image vidéo (38) comprennent des lignes droites (40, 42, 44) et un critère de validation supplémentaire est contrôlé, selon lequel l'image ne contient que des lignes (40, 42, 44) dont les prolongations se croisent en un unique point de fuite (46),
- le signal de validation de démarrage (F) n'est émis que lorsque tous les critères de validation sont remplis, et
- la procédure de reconnaissance d'objet inclut la recherche de caractéristiques prédéfinies d'obstacles et, lorsque les caractéristiques d'un obstacle sont détectées, l'émission automatique du signal de validation du démarrage (F) est inhibée sans contrôle supplémentaire des critères de validation.

2. Procédé selon la revendication 1, **caractérisé en ce que** le contrôle du critère de validation s'effectue sur la base des lignes (36) de l'image vidéo qui correspondent à chaque fois à une zone de la surface de la voie de circulation (50) à une distance donnée du véhicule (32).

3. Procédé selon la revendication 1 ou 2, **caractérisé en ce que** le contrôle du critère de validation s'effectue par une analyse d'un histogramme.

4. Procédé selon l'une des revendications 1 à 3, **caractérisé en ce que** le contrôle du critère de validation inclut un processus de croissance de région.

5. Procédé selon l'une des revendications 1 à 4, **caractérisé en ce que** l'image vidéo est analysée à l'aide d'un classificateur formé sur une voie de circulation libre et qu'un critère de validation supplémentaire consiste **en ce que** le classificateur reconnaisse une voie de circulation libre.

6. Procédé selon l'une des revendications 1 à 5, **caractérisé en ce que** la procédure de reconnaissance d'objet inclut la recherche de caractéristiques prédéfinies d'objets (40, 42, 44) qui ne sont pas des obstacles et que les caractéristiques ainsi reconnues ne sont pas prises en compte lors du contrôle des critères de validation.

7. Procédé selon l'une des revendications 1 à 6, **caractérisé en ce que** l'image vidéo est soumise à une analyse de mouvement et que les objets sont reconnus au moyen de leur mouvement dans l'image vidéo.

8. Système d'assistance au conducteur pour véhicules automobiles, **caractérisé en ce qu'**il est conçu pour mettre en oeuvre le procédé selon l'une des revendications 1 à 7.

## Fig. 1

*52*

*54*

*Fig. 5*

*52*

*56*

*54*

*Fig. 6*

*38*

*60*

*58*

*Fig. 7*

*Fig. 8*

*Fig. 9*

## Fig. 10

S1 — BEWEGUNG?

S3 — MEHRERE PEAKS IM HISTOGRAMM ?

S4 — ALLE KANTEN SCHNEIDEN SICH IM GLEICHEN FLUCHTPUNKT ?

S5 — REGION-GROWING ERGIBT I. W. KONVEXE FLÄCHE ?

S6 — GERINGES TEXTURMASS ?

S7 — KLASSIFKATOR: STRASSE FREI ?

S2 — ANFAHRT SPERREN

S8 — ANFAHRT FREIGENEN

S9 — BEWEGUNG?

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10017279 A
- DE 19924142
- DE 4434698 A1